# EUROPÄISCHE PATENTSCHRIFT

(11) **EP 1 050 421 B1**
(45) Veröffentlichungstag und Bekanntmachung des Hinweises auf die Patenterteilung: **26.04.2006**
(21) Anmeldenummer: 00104201.9
(22) Anmeldetag: 01.03.2000
(51) Int. Cl.: B60J 7/12

(54) **Faltverdeck für ein Fahrzeug**
Foldable roof for vehicle
Capote pliante pour véhicule

(30) Priorität: 07.05.1999 DE 19921305
(43) Veröffentlichungstag der Anmeldung: 08.11.2000
(73) Patentinhaber: Dr.Ing. h.c.F. Porsche Aktiengesellschaft, 70435 Stuttgart (DE)
(72) Erfinder: Pfertner, Kurt, 71299 Wimsheim (DE)

(56) Entgegenhaltungen:
- EP-A- 0 303 018
- DE-A- 4 104 658
- DE-A- 4 127 387
- DE-C- 4 218 380
- DE-U- 29 720 065
- US-A- 5 733 620

## Beschreibung

Die Erfindung bezieht sich auf ein Faltverdeck für ein Fahrzeug gemäß dem Oberbegriff des Patentanspruchs 1.

Aus der gattungsbildenden DE 44 41 666 C1 geht ein Faltverdeck für einen Personenkraftwagen hervor, das sich aus einem Verdeckgestell und einem außenseitig am Verdeckgestell aufgespannten Verdeckbezug zusammensetzt, wobei das mit aufbauseitig angeordneten Verdecklagern zusammenwirkende Verdeckgestell einen benachbart dem Windschutzscheibenrahmen verlaufenden großflächigen formsteifen Verdeckabschnitt, einen den Fahrgastraum bogenförmig überspannenden Hauptspriegel und einen heckseitigen Spannbügel umfaßt. Dieses Faltverdeck zeichnet sich durch einen einfachen Aufbau, eine hohe Stabilität und eine gute Funktion aus.

Aufgabe der Erfindung ist es, ein Faltverdeck der eingangs genannten Gattung so weiterzubilden, daß das Geräuschniveau im Fahrbetrieb des Fahrzeuges innerhalb des Fahrgastraumes reduziert wird.

Erfindungsgemäß wird diese Aufgabe durch die Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Anordnung eines Innenhimmels das Geräuschniveau während des Fahrbetriebes im Fahrgastraum deutlich abgesenkt wird. Der Innenhimmel läßt sich schnell und einfach mit dem Faltverdeck verbinden und kundendienstfreundlich wieder demontieren.

Vorteilhafter Weise setzt sich der Innenhimmel aus einem etwa rechteckförmigen Mittelteil und zwei an die Längsseiten des Mittelteils angebundene Seitenteile zusammen. Das Mittelteil ist vorne, hinten und seitlich lösbar an den großflächigen vorderen Verdeckabschnitt angebunden. Ferner ist es am querverlaufenden oberen Abschnitt des Hauptspriegels lösbar festgelegt. Endstücke der vorderen Klemmleiste bilden zugleich ein vorderes Lager von seitlichen Haltedrähten, an denen seitliche Schlaufen des Innenhimmels festlegbar sind. Die beiden Seitenteile sind lediglich an ihren unteren Randbereichen am heckseitigen Spannbügel bzw. an beiden Verdecklagern lösbar befestigt.

Ein Ausführungsbeispiel der Erfindung ist in der Zeichnung dargestellt und wird im folgenden näher erläutert:

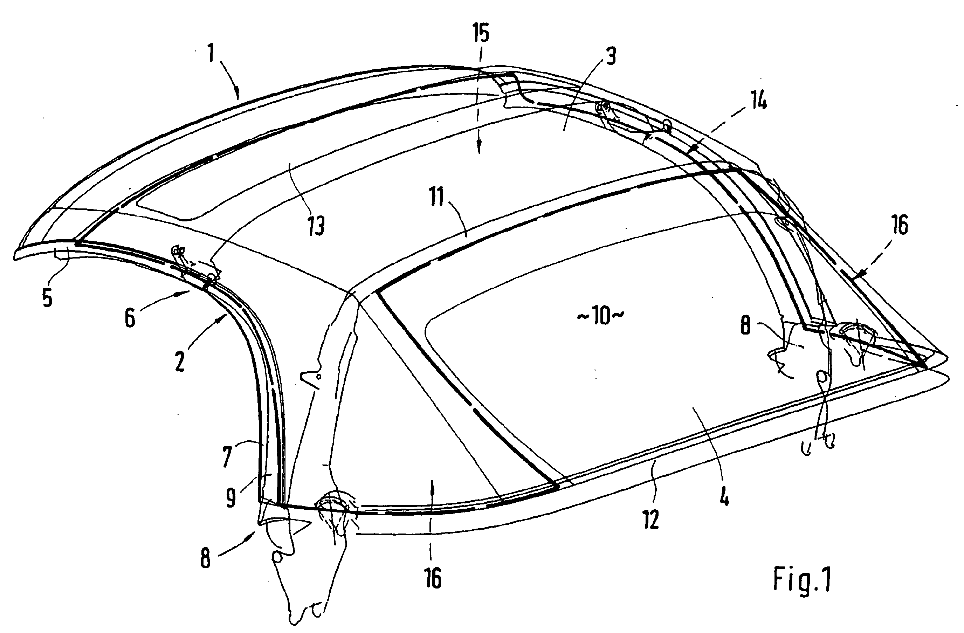

Es zeigen
- Fig. 1: eine perspektivische Ansicht von schräg hinten auf ein Faltverdeck mit einem Innenhimmel,
- Fig. 2: eine perspektivische Teilansicht von schräg hinten auf den Innenhimmel des Faltverdecks,
- Fig. 3: einen Schnitt nach der Linie III-III der Fig. 2 in größerer Darstellung,
- Fig. 4: einen Schnitt nach der Linie IV-IV der Fig. 2 in größerer Darstellung,
- Fig. 5: einen Schnitt nach der Linie V-V der Fig. 2 in größerer Darstellung,
- Fig. 6: einen Schnitt nach der Linie VI-VI der Fig. 2 in größerer Darstellung,
- Fig. 7: einen Schnitt nach der Linie VII-VII der Fig. 2 in größerer Darstellung,
- Fig. 8: einen Schnitt nach der Linie VIII-VIII der Fig. 2 in größerer Darstellung,
- Fig. 9: einen Schnitt nach der Linie IX-IX der Fig. 2 in größerer Darstellung,
- Fig. 10: einen Schnitt nach der Linie X-X der Fig. 2 in größerer Darstellung und
- Fig. 11: eine Einzelheit X der Fig. 2 in größerer Darstellung.

Ein Faltverdeck 1 für ein Fahrzeug, insbesondere für einen Personenkraftwagen, setzt sich aus einem Verdeckgestell 2 und einem außenseitig am Verdeckgestell 2 aufgespannten, flexiblen Verdeckbezug 3 zusammen. Im hinteren Bereich des Verdeckbezuges 3 ist eine Sichtscheibe 4 vorgesehen, die durch eine flexible oder starre Heckscheibe gebildet wird.

Das Verdeckgestell 2 umfaßt im wesentlichen einen benachbart einem Windschutzscheibenrahmen angeordneten großflächigen formsteifen Verdeckabschnitt 5, der an seinen beiden Längsseiten 6 jeweils über einen einteilig ausgebildeten B-Säulenlenker 7 unmittelbar am angrenzenden Verdecklager 8 abgestützt ist. Zur Anlenkung des formsteifen Verdeckabschnitts 5 ist benachbart jedes B-Säulenlenkers 7 ferner ein Hauptlenker 9 angeordnet. Ferner umfaßt das Verdeckgestell 2 einen den Fahrgastraum 10 bogenförmig überspannenden Hauptspriegel 11 und einen heckseitigen Spannbügel 12. Der konstruktive Aufbau des Verdeckgestells 2 ist in der DE 44 41 666 C1 ausführlich beschrieben. Der großflächige formsteife Verdeckabschnitt 5 wird durch ein Druckgußteil aus einer Leichtmetallegierung (z.B. Alu- oder Magnesiumlegierung) gebildet und weist aus Gewichtsgründen eine mittige, etwa rechteckförmige Aussparung 13 auf.

Zur Reduzierung des im Fahrbetrieb des Fahrzeuges auftretenden Geräuschniveaus innerhalb des Fahrgastraumes 10 ist auf der dem Fahrgastraum 10 zugewandten Seite des Verdeckgestells 2 ein Innenhimmel 14 vorgesehen, der örtlich am großflächigen vorderen Verdeckabschnitt 5, am Hauptspriegel 11, am heckseitigen Spannbügel 12 und an beiden Verdecklagern 8 lösbar befestigt ist.

Der aus einem Himmelstoff gefertigte Innenhimmel 14 setzt sich aus einem etwa rechteckförmigen Mittelteil 15 und zwei an die Längsseiten des Mittelteils 15 angebundene Seitenteile 16 zusammen, wobei die Seitenteile 16 mit dem Mittelteil 15 jeweils entlang der Längserstreckung des Mittelteils 15 vernäht sind.

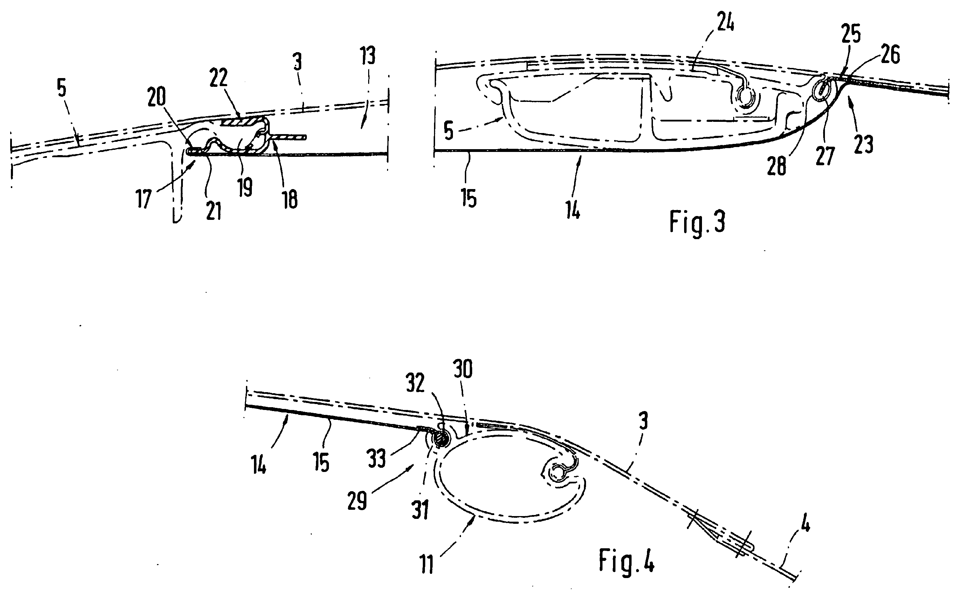

Am vorderen Randbereich 17 des Mittelteils 15 des Innenhimmels 14 ist eine profilierte querverlaufende Klemmleiste 18 aus Kunststoff vorgesehen, die auf einen korrespondierend ausgebildeten hinterschnittenen Flansch 19 des formsteifen Verdeckabschnitts 5 aufgesteckt ist (Fig. 3). Der Flansch 19 bildet eine vordere, querverlaufende Begrenzung der rechteckförmigen Aussparung 13.

Ein umgeschlagener vorderer Endbereich 20 ist mit einem unteren Schenkel 21 der etwa U-förmig profilierten Klemmleiste 18 durch Nähen und/oder Kleben fest verbunden. Der obere Schenkel 22 weist eine geringere Länge auf als der profilierte untere Schenkel 21 (Fig. 3). Bei montiertem Innenhimmel 14 deckt der Himmelstoff die darüberliegende Klemmleiste 18 vollständig ab.

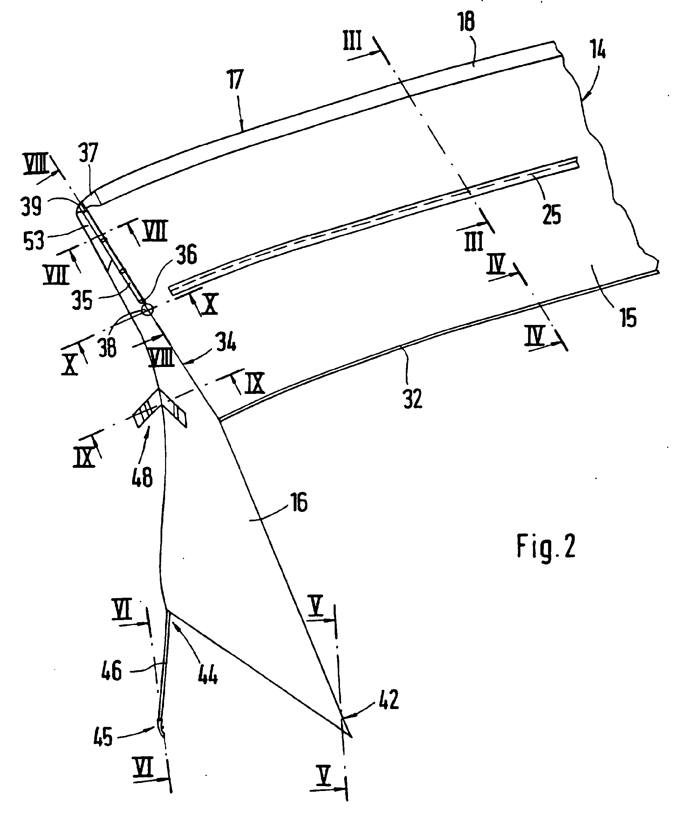

Am hinteren Randbereich 23 des formsteifen Verdeckabschnitts 5 ist der Innenhimmel 14 entlang der Innenkontur des Verdeckabschnitts 5 bzw. einer von oben aufklipsbaren Leiste 24 hochgezogen und an der Leiste 24 lösbar befestigt. Zur Festlegung des Innenhimmels 14 ist an der Oberseite des Himmelstoffes ein querverlaufender Abnäher 25 vorgesehen, der abschnittsweise durch Kleben und eine querverlaufende Naht 26 mit dem Himmelstoff verbunden ist. Auf ein vor der Naht 26 liegendes freies Ende des Abnähers 25 ist ein Kederprofil 27 aus Kunststoff aufgesetzt und fest mit dem Abnäher 25 verbunden. Das Kederprofil 27 ist von der Seite her in eine querverlaufende hinterschnittene Aufnahmenut 28 einsetzbar, die am oberen hinteren Ende der aufklipsbaren Leiste 24 ausgebildet ist. Der Abnäher 25 und das Kederprofil 27 sind in Fahrzeugquerrichtung gesehen etwas schmaler als das Mittelteil 15 des Innenhimmels 14 (Fig. 2 und 3).

Der hintere querverlaufende Randbereich 29 des Mittelteils 15 des Innenhimmels 14 verläuft mit Abstand zum oberen Rand der Sichtscheibe 4 und ist an der Vorderseite eines oberen querverlaufenden Abschnitts 30 des Hauptspriegels 11 lösbar befestigt (Fig. 4). Hierzu ist am querverlaufenden Hohlprofil des Hauptspriegels 11 eine hinterschnittene Aufnahmenut 31 ausgebildet, in die ein mit einem Einlegeteil 32 versehener umgeschlagener ösenförmiger Rand 33 des Mittelteils 14 von der Seite her einschiebbar ist. Das biegsame, im Querschnitt kreisrunde Einlegeteil 32 aus Kunststoff, Gummi oder dergleichen ist in den ösenförmigen ausgebildeten Rand des Mittelteils 14 eingesetzt, wobei beide seitlich außenliegenden Enden des Randes 33 nach dem Einsetzen des Einlegeteils 32 zugenäht werden.

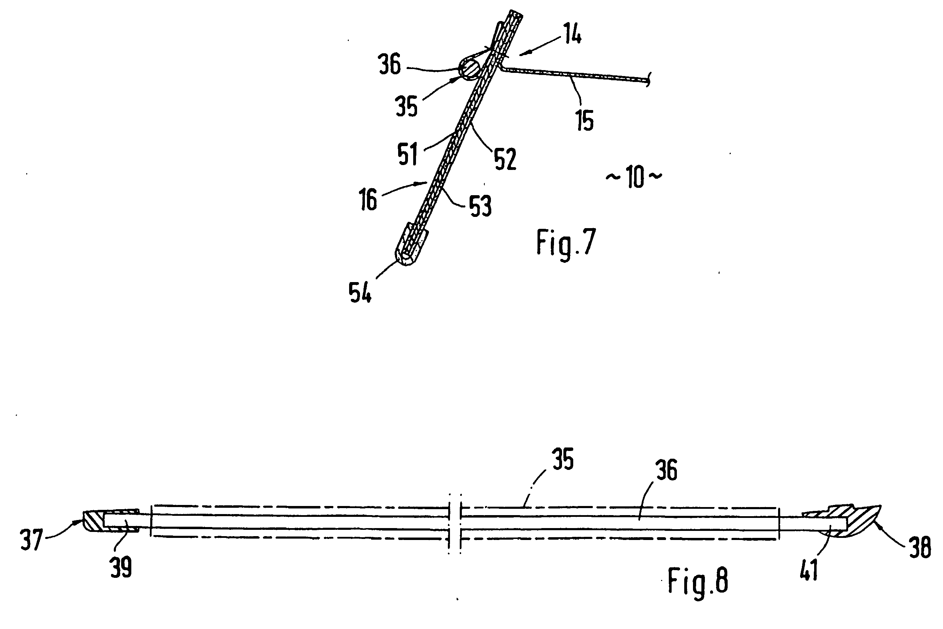

Im gemeinsamen Verbindungsbereich 34 von Mittelteil 15 und Seitenteil 16 ist jeweils eine seitliche Festlegung des Innenhimmels 14 am formsteifen Verdeckabschnitt 5 vorgesehen. Hierzu ist am Innenhimmel 14 auf der dem Fahrgastraum 10 abgekehrten Seite eine längsverlaufende Halteschlaufe 35 angenäht, durch die ein stabiler Haltedraht 36 hindurchführbar ist (Fig. 7). Der Haltedraht 36 überragt die längsverlaufende Halteschlaufe 35 an beiden Enden. Ein vorderes Ende des Haltedrahtes 36 ist an einem seitlichen Endstück 37 der querverlaufenden Klemmleiste 18 und das andere Ende ist an einem in den formsteifen Verdeckabschnitt 5 einklipsbaren Haltepilz 38 festlegbar. Jedes seitliche Endstück 37 der Klemmleiste 18 weist eine andere Profilierung auf als die Klemmleiste 18 und ist mit dieser, beispielsweise durch Schweißen, fest verbunden. Das seitliche Endstück 37 verjüngt sich - in der Draufsicht gesehen - nach außen hin und weist an seinem freien außenliegenden Ende eine sich in Fahrzeuglängsrichtung erstreckende zylindrische Ausnehmung 39 auf, in die ein vorderes Ende des Haltedrahtes 36 einsetzbar ist. Das freie Ende des Endstückes 37 ist in eine an der Oberseite jedes Seitenteiles angeordnete Aufnahmetasche 40 einsteckbar (Fig. 11).

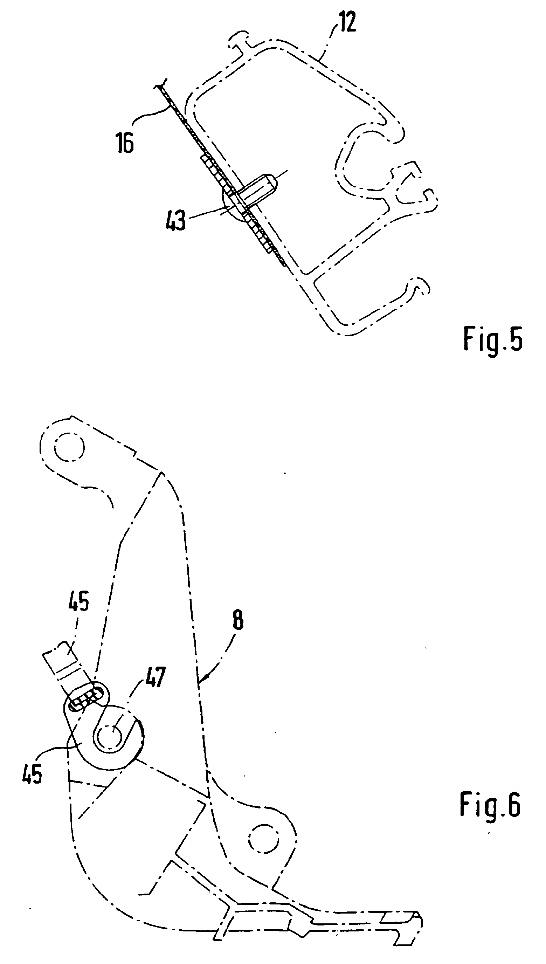

An der Aufnahmetasche 40 ist eine Öffnung zum Hindurchführen des Haltedrahtes 36 angeordnet. Der von unten her in den formsteifen Verdeckabschnitt 5 einklipsbare Haltepilz 38 aus Kunststoff weist eine weitere zylindrische Ausnehmung 41 zur Aufnahme des hinteren Endbereiches des Haltedrahtes 36 auf. Die längsverlaufende Halteschlaufe 35 beginnt etwa in Verlängerung der Hinterkante des Klemmprofils 18 und endet kurz vor dem querverlaufenden Abnäher 25. Die Seitenteile 16 des Innenhimmels 14 verbreitern sich von vorne nach hinten hin kontinuierlich. Der innenliegende untere Randbereich 42 der beiden Seitenteile 16 ist im Ausführungsbeispiel über eine Schraubverbindung 43 mit dem angrenzenden heckseitigen Spannbügel 12 verbunden (Fig. 5). Anstelle der Schraubverbindung 43 könnte auch eine Druckknopfverbindung oder dergleichen vorgesehen sein.

Der außenliegende untere Randbereich 44 der beiden Seitenteile 16 ist mittels eines Hakens 45 am angrenzenden darunterliegenden Verdecklager 8 befestigt, wobei zwischen dem Haken 45 und dem Seitenteil 16 ein gespanntes flexibles doppellagiges Zugelement 46 aus Gummi zwischengeschaltet ist. Der Haken 45 umgreift einen querverlaufenden Bolzen 47 des Verdecklagers 8. Der äußere Rand jedes Seitenteiles 16 ist etwa in einem mittleren Bereich seiner Längserstreckung über einen lösbaren Klettverschluß 48 mit dem Hauptlenker 9 des Verdeckgestells 2 verbunden.

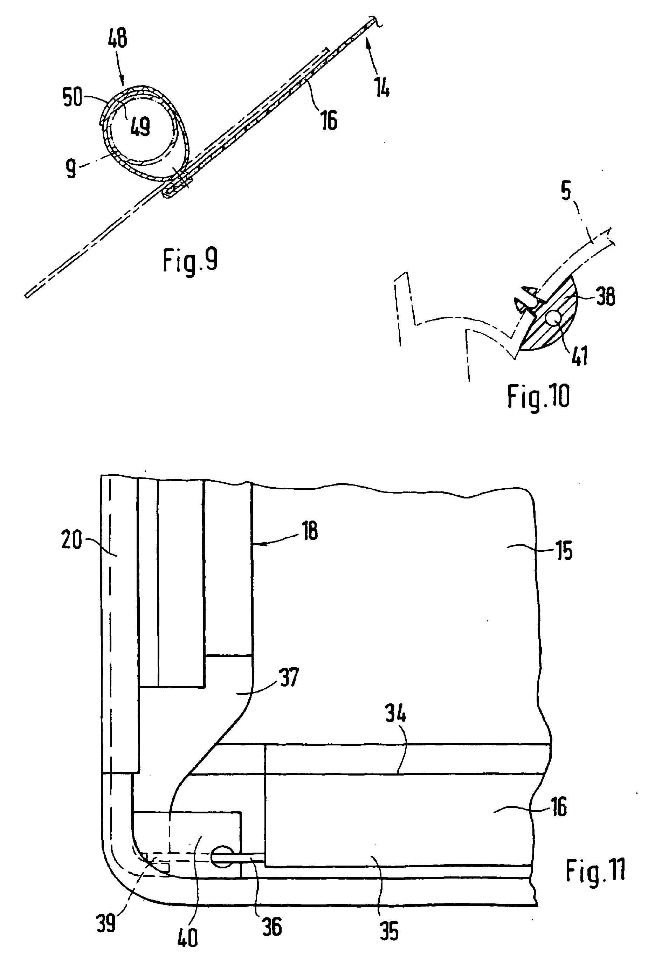

Jeder Klettverschluß 48 besteht aus einem streifenförmigen Klettband 49 und einem streifenförmigen Flauschband, die jeweils mit einem Ende mit dem Randbereich des Seitenteiles 16 vernäht sind. Beide Bänder 49, 50 werden abschnittsweise um den Hauptlenker 9 herumgeführt und dann übereinandergelegt, wodurch die Klettschlußverbindung erfolgt (Fig. 9).

Im vorderen Bereich ist jedes Seitenteil 16 doppellagig ausgebildet, wobei zwischen den Stofflagern 51, 52 eine innere Versteifungseinlage 53 eingebettet ist. Die Seitenteile 16 sind über einen wesentlichen Teil ihres Umfangs mit einem randseitigen Einfaßstreifen 54 versehen (Fig. 7).

## Patentansprüche

1. Faltverdeck für ein Fahrzeug, insbesondere Personenkraftwagen, das sich aus einem Verdeckgestell und einem außenseitig am Verdeckgestell aufgespannten Verdeckbezug zusammensetzt, wobei das mit aufbauseitig angeordneten Verdecklagern zusammenwirkende Verdeckgestell einen vorderen benachbart dem Windschutzscheibenrahmen verlaufenden großflächigen formsteifen Verdeckabschnitt, einen Hauptspriegel und einen heckseitigen Spannbügel umfaßt, **dadurch gekennzeichnet, daß** auf der einem Fahrgastraum (10) zugewandten Seite des Verdeckgestells (2) ein Innenhimmel (14) vorgesehen ist, der sich aus einem Mittelteil (15) und zwei an die Längsseiten des Mittelteils (15) angebundenen Seitenteilen (16) zusammensetzt, wobei das Mittelteil (15) am großflächigen formsteifen Verdeckabschnitt (5) sowie am Hauptspriegel (11) lösbar befestigt ist und daß die unteren Randbereiche beider Seitenteile (16) einerseits am Spannbügel (12) und andererseits an den Verdecklagern (8) lösbar in Lage gehalten sind.

2. Faltverdeck nach Anspruch 1, **dadurch gekennzeichnet, daß** jedes Seitenteil (16) mit der angrenzenden Längsseite des Mittelteils (15) durch Nähen verbunden ist.

3. Faltverdeck nach Anspruch 1, **dadurch gekennzeichnet, daß** ein umgeschlagener vorderer Endbereich (20) des Innenhimmels (14) mit einer profilierten querverlaufenden Klemmleiste (18) verbunden ist, die auf einen korrespondierend ausgebildeten profilierten Flansch (19) des formsteifen Verdeckabschnitts (5) aufgesteckt ist.

4. Faltverdeck nach Anspruch 3, **dadurch gekennzeichnet, daß** der Endbereich (20) des Innenhimmels (14) durch Nähen und/oder Kleben an der Klemmleiste (18) festlegbar ist

5. Faltverdeck nach Anspruch 1, **dadurch gekennzeichnet, daß** zur Festlegung des Innenhimmels (14) am hinteren querverlaufenden Rand des formsteifen Verdeckabschnitts (5) am Innenhimmel (14) ein Abnäher (25) angeordnet ist, der mit einem endseitigen Kederprofil (27) in eine hinterschnittene Aufnahmenut (28) einer von oben auf den formsteifen Verdeckabschnitt (5) aufklipsbaren Leiste (24) einführbar ist.

6. Faltverdeck nach Anspruch 1, **dadurch gekennzeichnet, daß** der hintere, querverlaufende Randbereich (29) des Innenhimmels (14) an einem oberen querverlaufenden Abschnitt (30) des Hauptspriegels (11) festlegbar ist.

7. Faltverdeck nach Anspruch 6, **dadurch gekennzeichnet, daß** am vorneliegenden oberen Rand (33) des querverlaufenden Abschnitts (30) des Hauptspriegels (11) eine hinterschnittene Aufnahmenut (31) zum Befestigen des hinteren Randbereiches des Mittelteils (15) des Innenhimmels (14) ausgebildet ist.

8. Faltverdeck nach Anspruch 1, **dadurch gekennzeichnet, daß** etwa im gemeinsamen Verbindungsbereich (34) von Mittelteil (15) und Seitenteil (16) am Innenhimmel (14) auf der dem Fahrgastraum (10) abgekehrten Seite eine längsverlaufende Halteschlaufe (35) angeordnet ist, durch die ein Haltedraht (36) hindurchführbar ist, der einerseits an einem seitlichen Endstück (37) der querverlaufenden Klemmleiste (18) und andererseits an einem in den formsteifen Verdeckabschnitt (5) einklipsbaren Haltepilz (38) festlegbar ist.

9. Faltverdeck nach Anspruch 8, **dadurch gekennzeichnet, daß** an der Oberseite jedes Seitenteiles (16) eine Aufnahmetasche (40) ausgebildet ist, in die das freie Ende des Endstückes (37) der querverlaufenden Klemmleiste (18) einsteckbar ist.

10. Faltverdeck nach Anspruch 8, **dadurch gekennzeichnet, daß** am freien Ende des Endstückes (37) ein zylindrische Ausnehmung (39) zur Aufnahme des vorderen Endbereiches des Haltedrahtes (36) ausgebildet ist.

11. Faltverdeck nach Anspruch 8, **dadurch gekennzeichnet, daß** am Haltepilz (38) eine zylindrische Ausnehmung (41) zur Aufnahme des hinteren Endbereiches des Haltedrahtes (36) vorgesehen ist.

12. Faltverdeck nach einem der vorangegangenen Ansprüche, **dadurch gekennzeichnet, daß** der innenliegende untere Randbereich (42) der beiden Seitenteile (16) jeweils über eine Schraubverbindung (43) am angrenzenden heckseitigen Spannbügel (12) in Lage gehalten ist.

13. Faltverdeck nach einem der vorangegangenen Ansprüche, **dadurch gekennzeichnet, daß** der außenliegende untere Randbereich (44) der beiden Seitenteile (16) jeweils mittels eines Hakens (45) am angrenzenden Verdecklager (8) befestigt ist, wobei zwischen Haken (45) und Seitenteil (16) ein gespanntes flexibles Zugelement (46) zwischengeschaltet ist.

14. Faltverdeck nach einem der vorangegangenen Ansprüche, **dadurch gekennzeichnet, daß** der äußere Rand jedes Seitenteiles (16) etwa in einem mittleren Bereich seiner Längserstreckung über einen lösbaren Klettverschluß (48) mit einem Hauptlenker (9) des Verdeckgestells (2) verbunden ist.

## Claims

1. A folding top for a vehicle, especially a passenger vehicle, comprising a folding-top frame and a folding-top fabric stretched over the outside of the folding-top frame, wherein the folding-top frame, which co-operates with folding-top supports arranged on the body, comprises a front, large-area, rigid folding-top portion extending adjacent to the windscreen frame, a main bow and a rear tensioning bow, **characterised in that** an inner lining (14) is provided on the side of the folding-top frame (2) facing a passenger compartment (10) and comprises a middle part (15) and two side parts (16) connected to the longitudinal sides of the middle part (15), wherein the middle part (15) is detachably fixed to the large-area, rigid folding-top portion (5) and the main bow (11), and **in that** the lower edge regions of the two side parts (16) are detachably held in position on the tensioning bow (12) on the one hand and on the folding-top supports (8) on the other hand.

2. A folding top according to claim 1, **characterised in that** each side part (16) is sewn to the adjacent longitudinal side of the middle part (15).

3. A folding top according to claim 1, **characterised in that** a folded front end region (20) of the inner lining (14) is connected to a profiled, transversely extending clamping strip (18) mounted on a correspondingly formed profiled flange (19) of the rigid folding-top portion (5).

4. A folding top according to claim 3, **characterised in that** the end region (20) of the inner lining (14) is securable to the clamping strip (18) by sewing and/or gluing.

5. A folding top according to claim 1, **characterised in that** a dart (25) is provided on the inner lining (14) in order to secure the inner lining (14) to the rear, transversely extending edge of the rigid folding-top portion (5) and has an end welt profile (27) insertable into an undercut locating groove (28) of a strip (24) which can be clipped onto the rigid folding-top portion (5) from above.

6. A folding top according to claim 1, **characterised in that** the rear transversely extending edge region (29) of the inner lining (14) is securable to an upper, transversely extending portion (30) of the main bow (11).

7. A folding top according to claim 6, **characterised in that** an undercut locating groove (31) for securing the rear edge region of the middle part (15) of the inner lining (14) is formed on the forward upper edge (33) of the transversely extending portion (30) of the main bow (11).

8. A folding top according to claim 1, **characterised in that** a longitudinally extending retaining loop (35) is arranged substantially in the common connecting region (34) of the middle part (15) and the side part (16) on the inner lining (14) on the side remote from the passenger compartment (10), through which retaining loop (35) a retaining wire (36) is introducible, which is securable at one end to a lateral end piece (37) of the transversely extending clamping strip (18) and at the other end to a retaining mushroom (38) which can be clipped into the rigid folding-top portion (5).

9. A folding top according to claim 8, **characterised in that** a locating pocket (40), into which the free end of the end piece (37) of the transversely extending clamping strip (18) is insertable, is formed on the upper side of each side part (16).

10. A folding top according to claim 8, **characterised in that** a cylindrical recess (39) for receiving the front end region of the retaining wire (36) is formed at the free end of the end piece (37).

11. A folding top according to claim 8, **characterised in that** a cylindrical recess (41) for receiving the rear end region of the retaining wire (36) is provided in the retaining mushroom (38).

12. A folding top according to any one of the preceding claims, **characterised in that** the inner lower edge region (42) of the two side parts (16) is held in position on the adjacent rear tensioning bow (12) by a respective screw connection (43).

13. A folding top according to any one of the preceding claims, **characterised in that** the outer lower edge region (44) of the two side parts (16) is fixed to the adjacent folding-top support (8) by means of a respective hook (45), wherein a taut flexible tension member (46) is interposed between the hook (45) and the side part (16).

14. A folding top according to any one of the preceding claims, **characterised in that** the outer edge of each side part (16) is connected, in an approximately central region of its longitudinal extent, to a main rod (9) of the folding-top frame (2) by means of a releasable hook-and-loop fastening (48).

## Revendications

1. Capote repliable pour un véhicule, en particulier un véhicule automobile, se composant d'un châssis de capote et d'un revêtement de capote tendu à l'extérieur sur le châssis de capote, le châssis de capote qui coopère avec des supports de capote disposés du côté de la carrosserie englobant un tronçon de capote avant indéformable de grande surface s'étendant au voisinage du cadre du pare-brise, un arceau principal et un étrier de tension du côté arrière, **caractérisée en ce que** du côté tourné vers un habitacle (10) du châssis de capote (2) est prévu un habillage de plafond intérieur (14), lequel est formé d'une partie centrale (15) et deux parties latérales (16) attachées aux côtés longitudinaux de la pièce centrale (15), la pièce centrale (15) étant fixée de manière détachable sur le tronçon de capote (5) indéformable de grande surface ainsi que sur l'arceau principal (11), et **en ce que** les zones du bord inférieures des deux parties latérales (16) sont maintenues en place de manière détachable, d'un côté au niveau de l'étrier de tension (12), et de l'autre côté au niveau des supports de capote (8).

2. Capote repliable selon la revendication 1, **caractérisée en ce que** chaque partie latérale (16) est reliée par des coutures au côté longitudinal adjacent de la partie centrale (15).

3. Capote repliable selon la revendication 1, **caractérisée en ce qu'**une zone d'extrémité avant rabattue (20) de l'habillage de plafond intérieur (14) est en liaison avec une languette de serrage (18) profilée s'étendant transversalement, laquelle coiffe une bride profilée (19) réalisée de manière correspondante du tronçon de capote (5) indéformable.

4. Capote repliable selon la revendication 3, **caractérisée en ce que** la zone d'extrémité (20) de l'habillage de plafond intérieur (14) peut être fixée sur la baguette de serrage (18) en la cousant et/ou en la collant.

5. Capote repliable selon la revendication 1, **caractérisée en ce que** pour la fixation de l'habillage de plafond intérieur (14) sur le bord arrière s'étendant transversalement du tronçon de capote indéformable (5), une pince (25) est disposée au niveau de l'habillage de plafond intérieur (14), laquelle peut être insérée avec profil de bourrelet (27) du côté de l'extrémité dans une rainure de réception contre-dépouillée (28) d'une baguette pouvant être clipsée (24) depuis le haut sur le tronçon de capote indéformable (5).

6. Capote repliable selon la revendication 1, **caractérisée en ce que** la zone du bord (29) arrière s'étendant transversalement de l'habillage de plafond intérieur (14) peut être fixée au niveau d'un tronçon (30) supérieur s'étendant transversalement de l'arceau principal (11).

7. Capote repliable selon la revendication (6), **caractérisée en ce qu'**au niveau du bord supérieur (33) situé à l'avant du tronçon s'étendant transversalement (30) de l'arceau principal (11), une rainure de réception contre-dépouillée (31) est formée pour la fixation de la zone du bord arrière de la partie centrale (15) de l'habillage de plafond intérieur (14).

8. Capote repliable selon la revendication 1, **caractérisée en ce que**, environ dans la zone de liaison commune (34) entre la partie centrale (15) et la partie latérale (16) au niveau de l'habillage de plafond intérieur (14), une boucle de fixation (35) s'étendant longitudinalement est mise en place sur le côté opposé à l'habitacle (10), à travers laquelle on peut faire passer un fil métallique de fixation (36), lequel peut être fixé d'un côté au niveau d'un élément d'extrémité latéral (37) de la baguette de serrage (18) s'étendant transversalement, et de l'autre côté au niveau d'un champignon de fixation 38 pouvant être clipsé dans le tronçon de capote (5) indéformable.

9. Capote repliable selon la revendication 8, **caractérisée en ce que**, sur le côté supérieur de chaque partie latérale (16), est formée une poche de réception (40) dans laquelle il est possible d'insérer l'extrémité libre de l'élément d'extrémité (37) de la baguette de serrage (18) s'étendant transversalement.

10. Capote repliable selon la revendication 8, **caractérisée en ce qu'**il est prévu, au niveau de l'extrémité libre de l'élément d'extrémité (37), un évidement cylindrique (39) pour le logement de la zone d'extrémité avant du fil métallique de fixation (36).

11. Capote repliable selon la revendication 8, **caractérisée en ce qu'**il est prévu, au niveau du champignon de fixation (38), un évidement cylindrique (41) pour le logement de la zone d'extrémité arrière du fil métallique de fixation (36).

12. Capote repliable selon l'une quelconque des revendications précédentes, **caractérisée en ce que** la zone du bord inférieure située à l'intérieur (42) des deux parties latérales (16) est maintenue en place respectivement via une liaison par vis (43) au niveau de l'étrier de tension (12) adjacent du côté arrière.

13. Capote repliable selon l'une quelconque des revendications précédentes, **caractérisée en ce que** la zone du bord inférieure située à l'extérieur (44) des deux parties latérales (16) est respectivement fixée via un crochet (45) au support de capote (8) adjacent, moyennant quoi un élément tendeur flexible (46) tendu est monté entre le crochet (45) et la partie latérale (16).

14. Capote repliable selon l'une quelconque des revendications précédentes, **caractérisée en ce que** le bord extérieur de chaque partie latérale (16) est en liaison, au niveau environ d'une zone du milieu de son étendue longitudinale, via une fermeture auto-agrippante détachable (48), avec une bielle principale (9) du châssis de capote (2).
